# EUROPEAN PATENT SPECIFICATION

(11) **EP 4 666 759 B1**
(45) Date of publication and mention of the grant of the patent: **07.10.2026**
(21) Application number: 24707342.2
(22) Date of filing: 13.02.2024
(51) Int. Cl.: H04W 68/02, H04W 76/27

(54) **SYSTEMS AND METHODS FOR SIGNALING PAGING DIFFERENTIATION PARAMETERS**
SYSTEME UND VERFAHREN ZUR SIGNALISIERUNG VON FUNKRUFDIFFERENZIERUNGSPARAMETERN
SYSTÈMES ET PROCÉDÉS DE SIGNALISATION DE PARAMÈTRES DE DIFFÉRENCIATION DE RADIOMESSAGERIE

(30) Priority: 14.02.2023 US 202363445692 P
(43) Date of publication of application: 24.12.2025
(73) Proprietor: Telefonaktiebolaget LM Ericsson (publ), 164 83 Stockholm (SE)
(72) Inventor: LYAZIDI, Mohammed Yazid, LONDON SE1 5ZW (GB); CHEN, Qian, 431 49 MÖLNDAL (SE); YANG, Yong, 428 36 KÅLLERED (SE)
(74) Representative: Ericsson
(86) International application number: PCT/SE2024/050125
(87) International publication number: WO 2024/172726

(56) References cited:
- US-A1- 2019 082 417
- US-A1- 2021 127 351
- US-A1- 2021 337 506
- "3rd Generation Partnership Project; Technical Specification Group Services and System Aspects; Procedures for the 5G System (5GS); Stage 2 (Release 18)", vol. SA WG2, no. V18.0.0, 21 December 2022 (2022-12-21), pages 1 - 773, XP052234769, Retrieved from the Internet <URL:https://ftp.3gpp.org/Specs/latest/Rel-18/23_series/23502-i00.zip 23502-i00.docx> [retrieved on 20221221]

## Description

### Related Applications

This application claims the benefit of provisional patent application serial number 63/445,692, filed February 14, 2023.

### Technical Field

The present disclosure relates generally to signaling parameters.

### Background

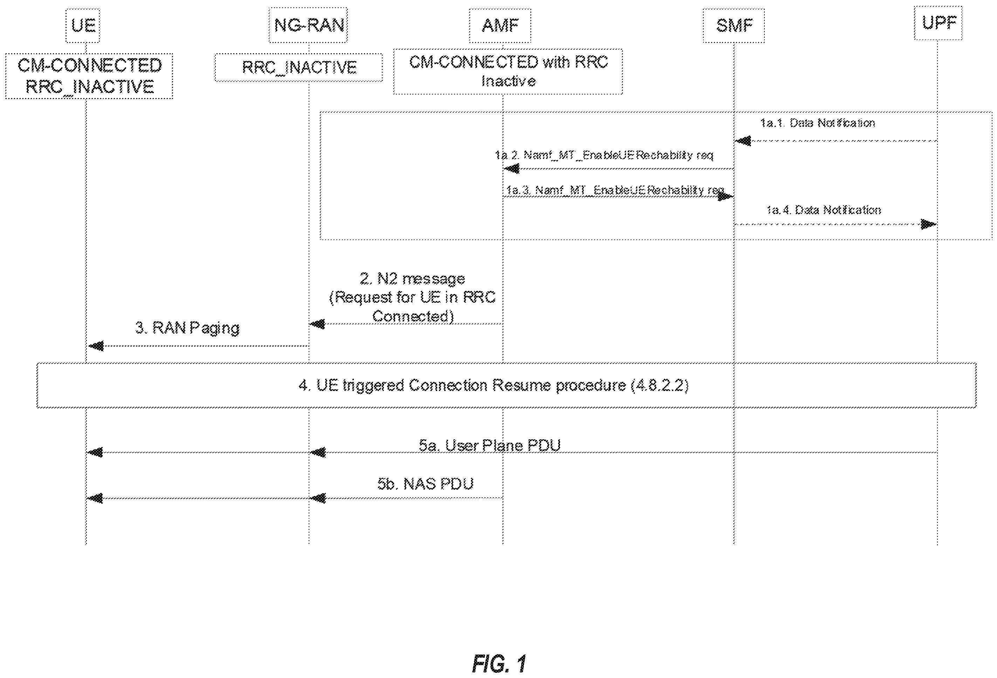

In the Release 18 RedCap study "FS_REDCAP_Ph2" targeting support of UE in RRC_INACTIVE state with long eDRX>10.24s, it was agreed to support MT data and signaling handling within the CN when the UE is unreachable due to long extended DRX in RRC inactive [R3-226170, LS On long eDRX support for RRC_INACTIVE, SA2]. Another agreement was to support Network Triggered Connection Resume for UE in RRC Inactive with CN based MT communication handling. When there is DL MT data coming from the CN, the NG-RAN performs RAN paging towards the UE based on an N2 message from the AMF in order to trigger the UE triggered Connection Resume procedure. This is mentioned in the signaling flow from S2-2209583 included as Figure 1.

| | |
|---|---|
| 1a. When downlink data is received and the SMF/UPF is requested to perform buffering as specified in clause 4.8.1.1a, the UPF/SMF checks with AMF for the possibility of data delivery, similar to step 2 of clause 4.24.2 with the following differences: | |
| | - The AMF determines if the UE is reachable based on the stored eDRX cycle value for RRC_INACTIVE state provided by NG-RAN in clause 4.8.1.1a. If the UE is unreachable, the AMF provides the Estimated Maximum Wait time in the response message based on the eDRX cycle value for RRC INACTIVE in AMF (steps 2-5 are skipped). If the UE is considered reachable, step 2 is triggered. |
| | NOTE: This handling is similar to CM-IDLE with eDRX. When the AMF provides the Estimated Maximum Wait time, it can consider the time needed for RRC level procedures (e.g. RRC RNA update procedure) when UE wakes up from the eDRX cycle. |
| 2. The AMF sends an N2 message to NG-RAN with the request for the UE to be transitioned to RRC_CONNECTED. | |
| **Editor's note: Whether the N2 message to be used is a new message or an existing message, e.g. N2 notification, needs coordination** with RAN WG. | |

When AMF asks NG-RAN to trigger the RAN paging, by sending a N2 notification in the step 2 (see also the EN in the red text above). For AMF to send such a trigger, the service consumer NF, e.g., a SMF, shall trigger AMF EnableUEReachability service to request UE connectivity. The AMF in turn triggers a RAN paging.

When the AMF receives the request from the SMF, it will determine if the UE is reachable:
- Sending a N2 message to trigger RAN paging to bring UE into RRC Connected if it is considered reachable based on the stored eDRX information;
- Sending a rejection response indicating the UE is not reachable together with an Estimated Maximum Wait time in the response message based on the eDRX cycle value for RRC INACTIVE in AMF if the UE is considered not reachable.

It is currently an open point in 3GPP CT4 WG whether the SMF can include additional parameters, such as PPI, 5QI in the EnableUEReachabilityReqData to trigger AMF to trigger RAN Paging message.

There currently exist certain challenge(s). Normally RAN gets the information on the Paging Policy to be applied (PPI) and other information to derive the PDU session resource context and then know which QoS flow it has received DL data from the packet header when packets reach RAN directly (e.g. in DL PDU SESSION INFORMATION (PDU Type 0) Format message defined in TS 38.415) and use it (among other things) to decide the paging policy (e.g. area, repetition time,... ) the allocation and retention priority (ARP) and 5QI associated to the PDU session, etc. Improved systems and methods for formulating paging policy are needed.

US2019082417A1 concerns 5G paging policy differentiation for network-triggered service requests. US2021127351A1 concerns determining a paging cause for an inactive UE based on the type of traffic that initiated paging.

US2021337506A1 concerns paging differentiation based on PPI/service or QoS-flow information in the radio network.

### Summary

The invention is defined by the appended claims, and relates to a method performed by a network node for formulating a paging policy and/or differentiation strategy when paging a UE in RRC_INACTIVE (claim 1) and a network node (apparatus) comprising processing circuitry and memory configured to formulate a paging policy and/ or differentiation strategy when paging a UE in RRC_INACTIVE (claim 11).

### Brief Description of the Drawings

The accompanying drawing figures incorporated in and forming a part of this specification illustrate several aspects of the disclosure, and together with the description serve to explain the principles of the disclosure.
Figure 1 illustrates a signaling flow from S2-2209583 where the Next Generation - Radio Access Network (NG-RAN) performs RAN paging towards the User Equipment (UE) based on an N2 message from the Access and Mobility Management Function (AMF) in order to trigger the UE triggered Connection Resume procedure;
Figure 2 shows an example of a communication system, in accordance with some embodiments;
Figure 3 illustrates a wireless communication system represented as a Fifth Generation (5G) network architecture composed of core Network Functions (NFs), in accordance with some embodiments;
Figure 4 illustrates a 5G network architecture using service-based interfaces between the NFs in the Control Plane (CP), instead of the point-to-point reference points/interfaces used in the 5G network architecture of Figure 3, in accordance with some embodiments;
Figure 5A illustrates a method performed by a network node, in accordance with some embodiments;
Figure 5B illustrates a method performed by a Core Network (CN) node, in accordance with some embodiments;
Figure 5C illustrates signaling of paging policy differentiation information to gNB, in accordance with some embodiments;
Figure 6 shows a UE in accordance with some embodiments;
Figure 7 shows a network node in accordance with some embodiments;
Figure 8 is a block diagram of a host, which may be an embodiment of the host of Figure 2, in accordance with various aspects described herein;
Figure 9 is a block diagram illustrating a virtualization environment in which functions implemented by some embodiments may be virtualized; and
Figure 10 shows a communication diagram of a host communicating via a network node with a UE over a partially wireless connection in accordance with some embodiments.

### Detailed Description

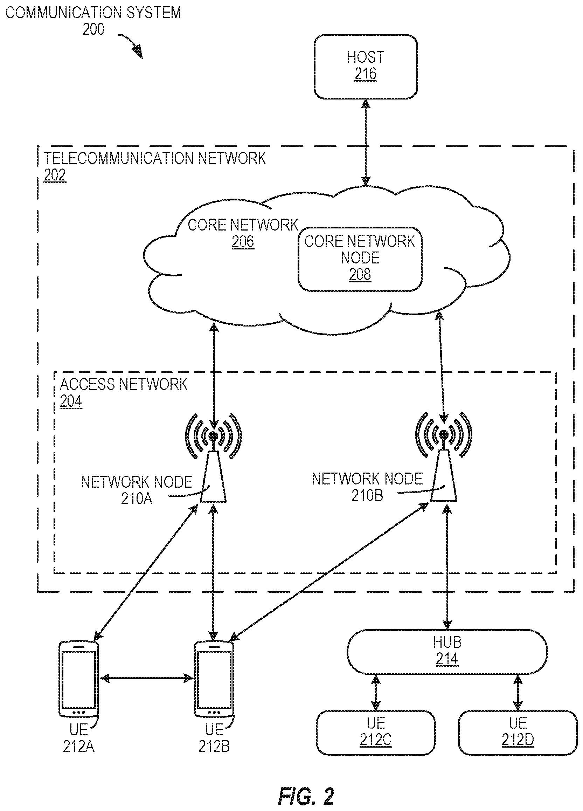

Figure 2 shows an example of a communication system 200 in accordance with some embodiments.

In the example, the communication system 200 includes a telecommunication network 202 that includes an access network 204, such as a Radio Access Network (RAN), and a core network 206, which includes one or more core network nodes 208. The access network 204 includes one or more access network nodes, such as network nodes 210A and 210B (one or more of which may be generally referred to as network nodes 210), or any other similar Third Generation Partnership Project (3GPP) access node or non-3GPP Access Point (AP). The network nodes 210 facilitate direct or indirect connection of User Equipment (UE), such as by connecting UEs 212A, 212B, 212C, and 212D (one or more of which may be generally referred to as UEs 212) to the core network 206 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 200 may include any number of wired or wireless networks, network nodes, UEs, and/or any other components or systems that may facilitate or participate in the communication of data and/or signals whether via wired or wireless connections. The communication system 200 may include and/or interface with any type of communication, telecommunication, data, cellular, radio network, and/or other similar type of system.

The UEs 212 may be any of a wide variety of communication devices, including wireless devices arranged, configured, and/or operable to communicate wirelessly with the network nodes 210 and other communication devices. Similarly, the network nodes 210 are arranged, capable, configured, and/or operable to communicate directly or indirectly with the UEs 212 and/or with other network nodes or equipment in the telecommunication network 202 to enable and/or provide network access, such as wireless network access, and/or to perform other functions, such as administration in the telecommunication network 202.

In the depicted example, the core network 206 connects the network nodes 210 to one or more hosts, such as host 216. These connections may be direct or indirect via one or more intermediary networks or devices. In other examples, network nodes may be directly coupled to hosts. The core network 206 includes one more core network nodes (e.g., core network node 208) that are structured with hardware and software components. Features of these components may be substantially similar to those described with respect to the UEs, network nodes, and/or hosts, such that the descriptions thereof are generally applicable to the corresponding components of the core network node 208. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-Concealing Function (SIDF), Unified Data Management (UDM), Security Edge Protection Proxy (SEPP), Network Exposure Function (NEF), and/or a User Plane Function (UPF).

The host 216 may be under the ownership or control of a service provider other than an operator or provider of the access network 204 and/or the telecommunication network 202 and may be operated by the service provider or on behalf of the service provider. The host 216 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system 200 of Figure 2 enables connectivity between the UEs, network nodes, and hosts. In that sense, the communication system 200 may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable Second, Third, Fourth, or Fifth Generation (2G, 3G, 4G, or 5G) standards, or any applicable future generation standard (e.g., Sixth Generation (6G)); Wireless Local Area Network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any Low Power Wide Area Network (LPWAN) standards such as LoRa and Sigfox.

In some examples, the telecommunication network 202 is a cellular network that implements 3GPP standardized features. Accordingly, the telecommunication network 202 may support network slicing to provide different logical networks to different devices that are connected to the telecommunication network 202. For example, the telecommunication network 202 may provide Ultra Reliable Low Latency Communication (URLLC) services to some UEs, while providing enhanced Mobile Broadband (eMBB) services to other UEs, and/or massive Machine Type Communication (mMTC)/massive Internet of Things (IoT) services to yet further UEs.

In some examples, the UEs 212 are configured to transmit and/or receive information without direct human interaction. For instance, a UE may be designed to transmit information to the access network 204 on a predetermined schedule, when triggered by an internal or external event, or in response to requests from the access network 204. Additionally, a UE may be configured for operating in single- or multi-Radio Access Technology (RAT) or multi-standard mode. For example, a UE may operate with any one or combination of WiFi, New Radio (NR), and LTE, i.e. be configured for Multi-Radio Dual Connectivity (MR-DC), such as Evolved UMTS Terrestrial RAN (E-UTRAN) NR - Dual Connectivity (EN-DC).

In the example, a hub 214 communicates with the access network 204 to facilitate indirect communication between one or more UEs (e.g., UE 212C and/or 212D) and network nodes (e.g., network node 210B). In some examples, the hub 214 may be a controller, router, content source and analytics, or any of the other communication devices described herein regarding UEs. For example, the hub 214 may be a broadband router enabling access to the core network 206 for the UEs. As another example, the hub 214 may be a controller that sends commands or instructions to one or more actuators in the UEs. Commands or instructions may be received from the UEs, network nodes 210, or by executable code, script, process, or other instructions in the hub 214. As another example, the hub 214 may be a data collector that acts as temporary storage for UE data and, in some embodiments, may perform analysis or other processing of the data. As another example, the hub 214 may be a content source. For example, for a UE that is a Virtual Reality (VR) headset, display, loudspeaker or other media delivery device, the hub 214 may retrieve VR assets, video, audio, or other media or data related to sensory information via a network node, which the hub 214 then provides to the UE either directly, after performing local processing, and/or after adding additional local content. In still another example, the hub 214 acts as a proxy server or orchestrator for the UEs, in particular in if one or more of the UEs are low energy IoT devices.

The hub 214 may have a constant/persistent or intermittent connection to the network node 210B. The hub 214 may also allow for a different communication scheme and/or schedule between the hub 214 and UEs (e.g., UE 212C and/or 212D), and between the hub 214 and the core network 206. In other examples, the hub 214 is connected to the core network 206 and/or one or more UEs via a wired connection. Moreover, the hub 214 may be configured to connect to a Machine-to-Machine (M2M) service provider over the access network 204 and/or to another UE over a direct connection. In some scenarios, UEs may establish a wireless connection with the network nodes 210 while still connected via the hub 214 via a wired or wireless connection. In some embodiments, the hub 214 may be a dedicated hub - that is, a hub whose primary function is to route communications to/from the UEs from/to the network node 210B. In other embodiments, the hub 214 may be a non-dedicated hub - that is, a device which is capable of operating to route communications between the UEs and the network node 210B, but which is additionally capable of operating as a communication start and/or end point for certain data channels.

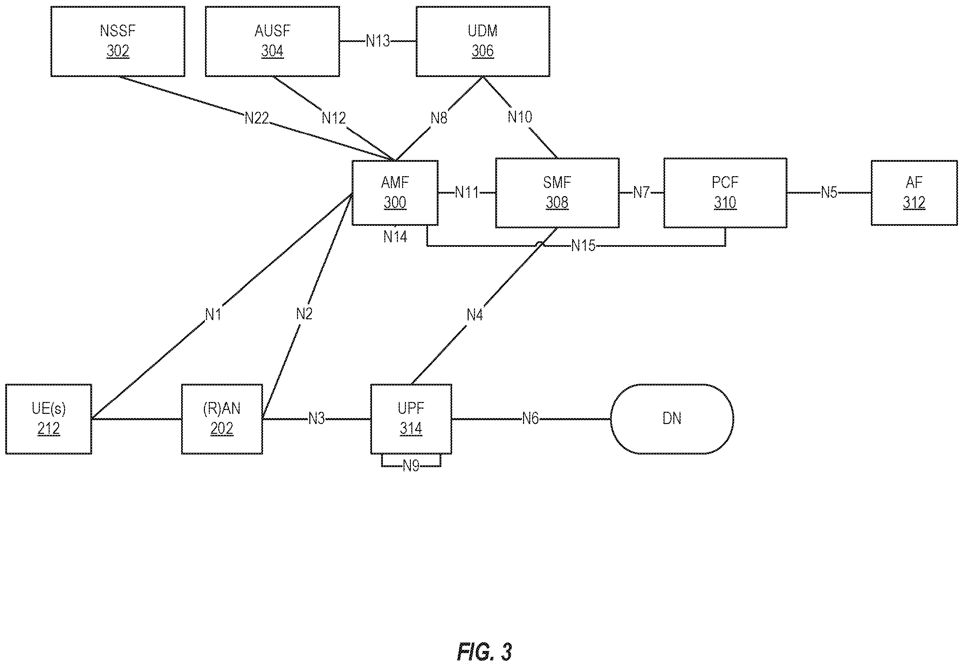

Figure 3 illustrates a wireless communication system represented as a 5G network architecture composed of core Network Functions (NFs), where interaction between any two NFs is represented by a point-to-point reference point/interface. Figure 3 can be viewed as one particular implementation of the system 200 of Figure 2.

Seen from the access side the 5G network architecture shown in Figure 3 comprises a plurality of UEs 212 connected to either a RAN 204 or an Access Network (AN) as well as an AMF 300. Typically, the R(AN) 204 comprises base stations, e.g. such as eNBs or gNBs or similar. Seen from the core network side, the 5GC NFs shown in Figure 3 include a NSSF 302, an AUSF 304, a UDM 306, the AMF 300, a SMF 308, a PCF 310, and an Application Function (AF) 312.

Reference point representations of the 5G network architecture are used to develop detailed call flows in the normative standardization. The N1 reference point is defined to carry signaling between the UE 212 and AMF 300. The reference points for connecting between the AN 204 and AMF 300 and between the AN 204 and UPF 314 are defined as N2 and N3, respectively. There is a reference point, N11, between the AMF 300 and SMF 308, which implies that the SMF 308 is at least partly controlled by the AMF 300. N4 is used by the SMF 308 and UPF 314 so that the UPF 314 can be set using the control signal generated by the SMF 308, and the UPF 314 can report its state to the SMF 308. N9 is the reference point for the connection between different UPFs 314, and N14 is the reference point connecting between different AMFs 300, respectively. N15 and N7 are defined since the PCF 310 applies policy to the AMF 300 and SMF 308, respectively. N12 is required for the AMF 300 to perform authentication of the UE 212. N8 and N10 are defined because the subscription data of the UE 212 is required for the AMF 300 and SMF 308.

The 5GC network aims at separating User Plane (UP) and Control Plane (CP). The UP carries user traffic while the CP carries signaling in the network. In Figure 3, the UPF 314 is in the UP and all other NFs, i.e., the AMF 300, SMF 308, PCF 310, AF 312, NSSF 302, AUSF 304, and UDM 306, are in the CP. Separating the UP and CP guarantees each plane resource to be scaled independently. It also allows UPFs to be deployed separately from CP functions in a distributed fashion. In this architecture, UPFs may be deployed very close to UEs to shorten the Round Trip Time (RTT) between UEs and data network for some applications requiring low latency.

The core 5G network architecture is composed of modularized functions. For example, the AMF 300 and SMF 308 are independent functions in the CP. Separated AMF 300 and SMF 308 allow independent evolution and scaling. Other CP functions like the PCF 310 and AUSF 304 can be separated as shown in Figure 3. Modularized function design enables the 5GC network to support various services flexibly.

Each NF interacts with another NF directly. It is possible to use intermediate functions to route messages from one NF to another NF. In the CP, a set of interactions between two NFs is defined as service so that its reuse is possible. This service enables support for modularity. The UP supports interactions such as forwarding operations between different UPFs.

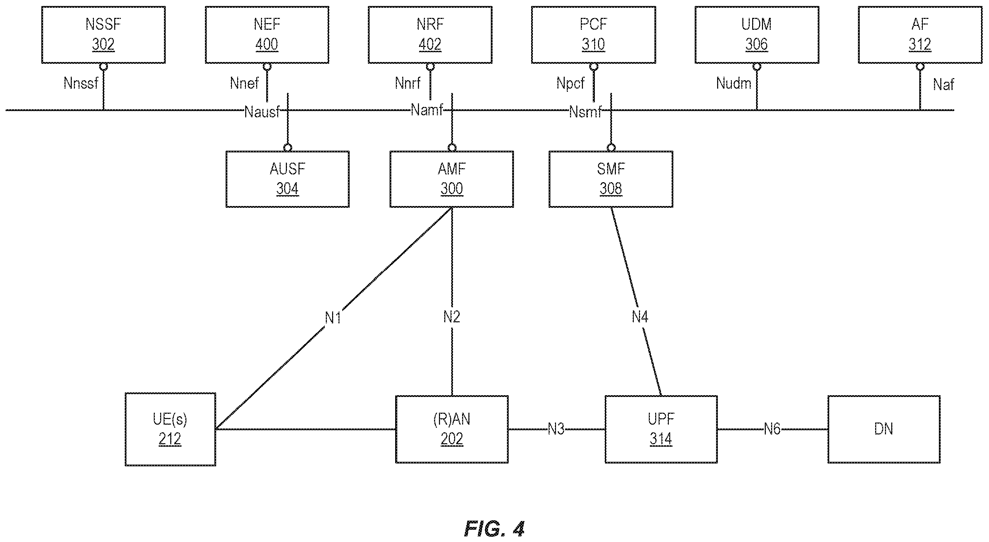

Figure 4 illustrates a 5G network architecture using service-based interfaces between the NFs in the CP, instead of the point-to-point reference points/interfaces used in the 5G network architecture of Figure 3. However, the NFs described above with reference to Figure 3 correspond to the NFs shown in Figure 4. The service(s) etc. that a NF provides to other authorized NFs can be exposed to the authorized NFs through the service-based interface. In Figure 4 the service based interfaces are indicated by the letter "N" followed by the name of the NF, e.g. Namf for the service based interface of the AMF 300 and Nsmf for the service based interface of the SMF 308, etc. The NEF 400 and the NRF 402 in Figure 4 are not shown in Figure 3 discussed above. However, it should be clarified that all NFs depicted in Figure 3 can interact with the NEF 400 and the NRF 402 of Figure 4 as necessary, though not explicitly indicated in Figure 3.

Some properties of the NFs shown in Figures 3 and 4 may be described in the following manner. The AMF 300 provides UE-based authentication, authorization, mobility management, etc. A UE 212, even using multiple access technologies is basically connected to a single AMF 300 because the AMF 300 is independent of the access technologies. The SMF 308 is responsible for session management and allocates Internet Protocol (IP) addresses to UEs. It also selects and controls the UPF 314 for data transfer. If a UE 212 has multiple sessions, different SMFs 308 may be allocated to each session to manage them individually and possibly provide different functionalities per session. The AF 312 provides information on the packet flow to the PCF 310 responsible for policy control in order to support QoS. Based on the information, the PCF 310 determines policies about mobility and session management to make the AMF 300 and SMF 308 operate properly. The AUSF 304 supports authentication function for UEs or similar and thus stores data for authentication of UEs or similar while the UDM 306 stores subscription data of the UE 212. The Data Network (DN), not part of the 5GC network, provides Internet access or operator services and similar.

An NF may be implemented either as a network element on a dedicated hardware, as a software instance running on a dedicated hardware, or as a virtualized function instantiated on an appropriate platform, e.g., a cloud infrastructure.

It is currently an open point in 3GPP CT4 WG whether the SMF can include additional parameters, such as Paging Policy Indicator (PPI), Fifth Generation (5G) Quality of Service (QoS) Identifier (5QI) in the EnableUEReachabilityReqData to trigger AMF to trigger RAN Paging message.

There currently exist certain challenges. Normally RAN gets the information on the Paging Policy to be applied (PPI) and other information to derive the PDU session resource context and then know which QoS flow it has received DL data from the packet header when packets reach RAN directly (e.g. in DL PDU SESSION INFORMATION (PDU Type 0) Format message defined in TS 38.415) and use it (among other things) to decide the paging policy (e.g. area, repetition time,... ) the Allocation and Retention Priority (ARP) and 5QI associated to the PDU session, etc.

However, if data is buffered in CN as per the Release 18 RedCap solution, there is no way for RAN to get any of the information. It is therefore an open question how RAN can get information from AMF for paging strategy differentiation if, from SMF side, SMF ends up providing such information to AMF in the EnableUEReachabilityReqData message to trigger AMF to send the RAN Paging message.

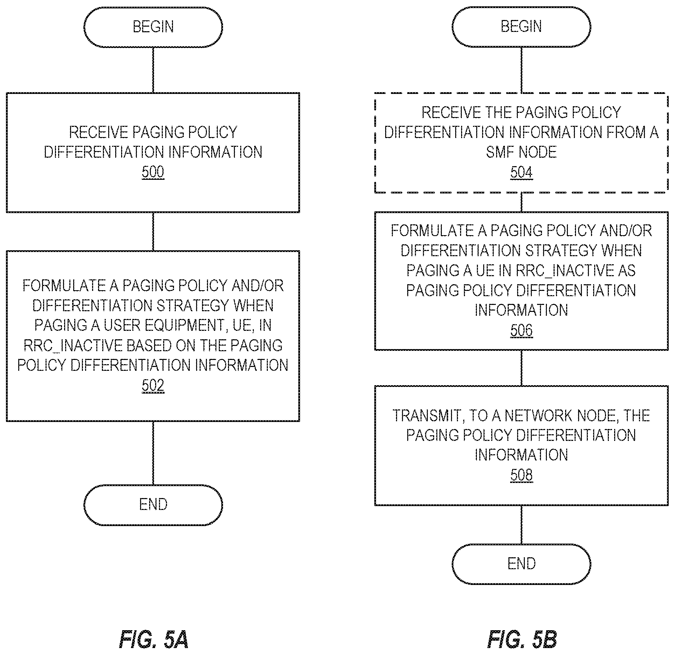

Systems and methods for signaling paging differentiation parameters are provided. Figure 5A illustrates a method performed by a network node (e.g., a gNB). The network node receives (FLOW100) paging policy differentiation information. The network node formulates (FLOW102) a paging policy and/or differentiation strategy when paging a UE in RRC_INACTIVE based on the paging policy differentiation information. In some embodiments, the paging policy differentiation information includes: a PPI; an ARP; a 5QI; and/or a PDU session ID information. By notifying the gNB of the paging policy differentiation information, RAN can decide the paging policy when paging the UE in RRC_INACTIVE and long eDRX > 10.24 sec and deliver the data according to the service operation.

Certain aspects of the disclosure and their embodiments may provide solutions to these or other challenges. Some embodiments include signaling methods to allow CN (AMF) sending the PPI/ARP/5QI and PDU session ID information to RAN over NG-C signaling, when provided by SMF, for RAN to formulate the paging policy and differentiation strategy when paging the UE in RRC_INACTIVE with long eDRX > 10.24 sec.

The signaling is done over new N2 message which indicates per PDU Session based paging and can provision the QoS flow information related to where the DL data is received.

Some embodiments include signaling during the request from AMF to RAN for triggering RAN paging based on the ARP, 5QI, PPI, PDU Session ID parameters, if received in EnableUEReachabilityReqData message from SMF, to help RAN decide for the paging policy/profile for Inactive.

Figure 5B illustrates a method performed by a Core Network (CN) node (e.g., an Access and Mobility Management Function (AMF) node). The CN node optionally receives (FLOW200) the paging policy differentiation information from a Session Management Function (SMF) node. The CN node formulates (FLOW202) a paging policy and/or differentiation strategy when paging a UE in RRC_INACTIVE as paging policy differentiation information. The CN node transmits (FLOW204), to a network node (e.g., a gNB), the paging policy differentiation information.

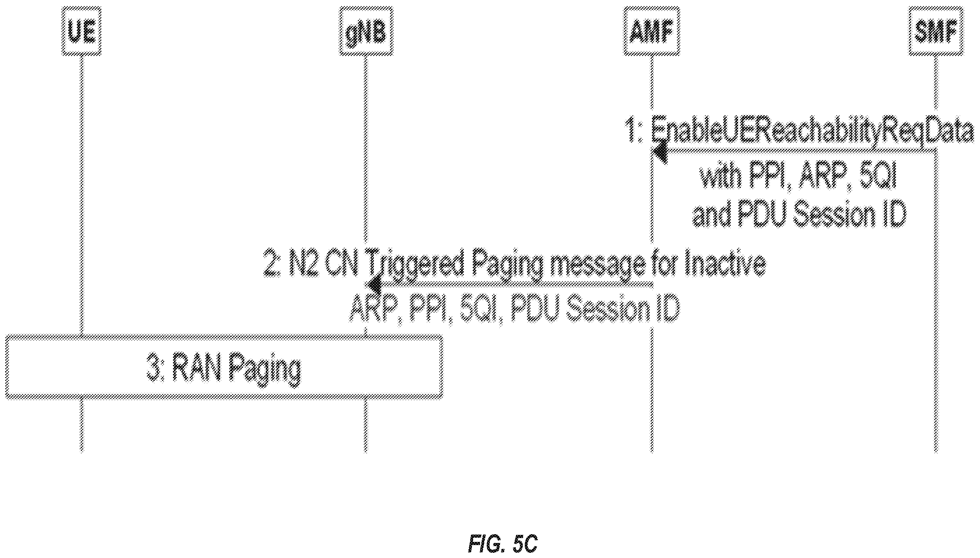

Figure 5C illustrates signaling of ARP, PPI, 5QI and PDU Session ID for AMF to gNB. In one embodiment, the SMF includes the Allocation and Retention Priority (ARP) and PDU session ID in the EnableUEReachabilityReqData message to AMF,

In one embodiment, upon receiving the EnableUEReachabilityReqData message from SMF containing the PPI, ARP, 5QI and PDU Session ID of the QoS flows, the AMF includes these parameters in a new NGAP message from AMF to the NG-RAN (gNB) to triggered RAN Paging and to formulate the paging policy. If AMF receives multiple EnableUEReachabilityReqData messages from different SMFs, the AMF aggregates these parameters (selects the parameters set with the highest value) before providing one set of parameters to RAN.

In a separate embodiment, the AMF includes instead the list of QoS flow list and PDU session information in the NGAP message to RAN.

The AMF sends these parameters either in a new N2 message or an existing N2 message.

In one embodiment, the AMF sends these parameters to another AMF.

Example, the AMF sends these parameters in case of AMF change, CN inter-RAT handover, etc.

A potential update to NGAP TS 38.413 v17.3.0, 9.2.4.X1 CN TRIGGERED RAN PAGING REQUEST is provided below. This message is sent by the AMF to request RAN performing RAN paging of the UE. Direction: AMF → NG-RAN node.

| **IE/Group Name** | **Presence** | **Range** | **IE type and reference** | **Semantics description** |
|---|---|---|---|---|
| Message Type | M | | 9.3.1.1 | |
| AMF UE NGAP ID | M | | 9.3.3.1 | |
| RAN UE NGAP ID | M | | 9.3.3.2 | |
| **Paging Policy Indicator (PPI)** | O | | INTEGER (0 .. 7, ...) | The Paging Policy Indicator is used for paging policy differentiation (see details in TS 23.501). |
| **Allocation and Retention Priority** | O | | 9.3.1.19 | |
| **5QI** | O | | INTEGER (0 .. 255, ...) | indicate the 5QI associated with the PDU session |
| **PDU Session ID** | O | | INTEGER (0 .. 255) | This IE identifies a PDU Session for a UE. The definition and use of the PDU Session ID is specified in TS 23.501 |

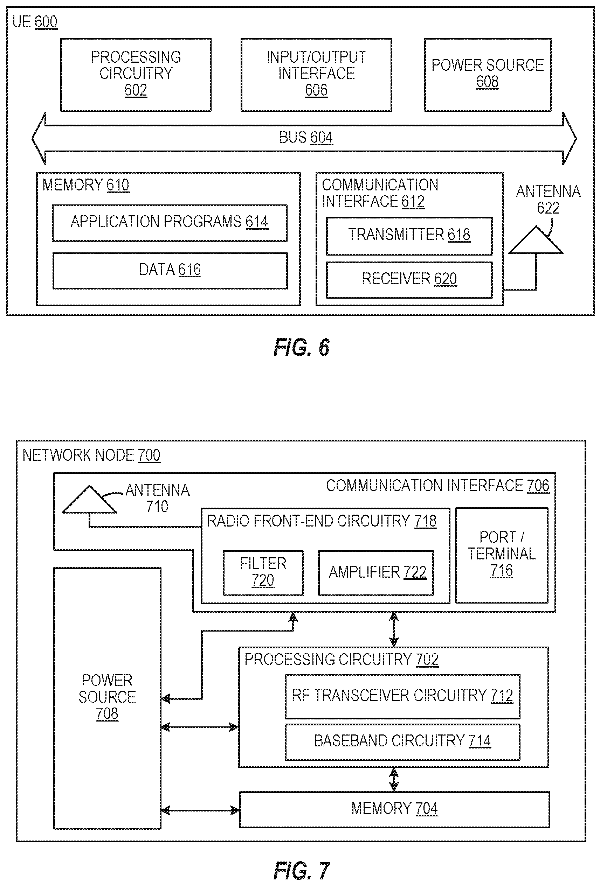

Figure 6 shows a UE 600 in accordance with some embodiments. As used herein, a UE refers to a device capable, configured, arranged, and/or operable to communicate wirelessly with network nodes and/or other UEs. Examples of a UE include, but are not limited to, a smart phone, mobile phone, cell phone, Voice over Internet Protocol (VoIP) phone, wireless local loop phone, desktop computer, Personal Digital Assistant (PDA), wireless camera, gaming console or device, music storage device, playback appliance, wearable terminal device, wireless endpoint, mobile station, tablet, laptop, Laptop Embedded Equipment (LEE), Laptop Mounted Equipment (LME), smart device, wireless Customer Premise Equipment (CPE), vehicle-mounted or vehicle embedded/integrated wireless device, etc. Other examples include any UE identified by the 3GPP, including a Narrowband Internet of Things (NB-IoT) UE, a Machine Type Communication (MTC) UE, and/or an enhanced MTC (eMTC) UE.

A UE may support Device-to-Device (D2D) communication, for example by implementing a 3GPP standard for sidelink communication, Dedicated Short-Range Communication (DSRC), Vehicle-to-Vehicle (V2V), Vehicle-to-Infrastructure (V2I), or Vehicle-to-Everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

The UE 600 includes processing circuitry 602 that is operatively coupled via a bus 604 to an input/output interface 606, a power source 608, memory 610, a communication interface 612, and/or any other component, or any combination thereof. Certain UEs may utilize all or a subset of the components shown in Figure 6. The level of integration between the components may vary from one UE to another UE. Further, certain UEs may contain multiple instances of a component, such as multiple processors, memories, transceivers, transmitters, receivers, etc.

The processing circuitry 602 is configured to process instructions and data and may be configured to implement any sequential state machine operative to execute instructions stored as machine-readable computer programs in the memory 610. The processing circuitry 602 may be implemented as one or more hardware-implemented state machines (e.g., in discrete logic, Field Programmable Gate Arrays (FPGAs), Application Specific Integrated Circuits (ASICs), etc.); programmable logic together with appropriate firmware; one or more stored computer programs, general purpose processors, such as a microprocessor or Digital Signal Processor (DSP), together with appropriate software; or any combination of the above. For example, the processing circuitry 602 may include multiple Central Processing Units (CPUs).

In the example, the input/output interface 606 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE 600. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 608 is structured as a battery or battery pack. Other types of power sources, such as an external power source (e.g., an electricity outlet), photovoltaic device, or power cell, may be used. The power source 608 may further include power circuitry for delivering power from the power source 608 itself, and/or an external power source, to the various parts of the UE 600 via input circuitry or an interface such as an electrical power cable. Delivering power may be, for example, for charging the power source 608. Power circuitry may perform any formatting, converting, or other modification to the power from the power source 608 to make the power suitable for the respective components of the UE 600 to which power is supplied.

The memory 610 may be or be configured to include memory such as Random Access Memory (RAM), Read Only Memory (ROM), Programmable ROM (PROM), Erasable PROM (EPROM), Electrically EPROM (EEPROM), magnetic disks, optical disks, hard disks, removable cartridges, flash drives, and so forth. In one example, the memory 610 includes one or more application programs 614, such as an operating system, web browser application, a widget, gadget engine, or other application, and corresponding data 616. The memory 610 may store, for use by the UE 600, any of a variety of various operating systems or combinations of operating systems.

The memory 610 may be configured to include a number of physical drive units, such as Redundant Array of Independent Disks (RAID), flash memory, USB flash drive, external hard disk drive, thumb drive, pen drive, key drive, High Density Digital Versatile Disc (HD-DVD) optical disc drive, internal hard disk drive, Blu-Ray optical disc drive, Holographic Digital Data Storage (HDDS) optical disc drive, external mini Dual In-line Memory Module (DIMM), Synchronous Dynamic RAM (SDRAM), external micro-DIMM SDRAM, smartcard memory such as a tamper resistant module in the form of a Universal Integrated Circuit Card (UICC) including one or more Subscriber Identity Modules (SIMs), such as a Universal SIM (USIM) and/or Internet Protocol Multimedia Services Identity Module (ISIM), other memory, or any combination thereof. The UICC may for example be an embedded UICC (eUICC), integrated UICC (iUICC) or a removable UICC commonly known as a 'SIM card.' The memory 610 may allow the UE 600 to access instructions, application programs, and the like stored on transitory or non-transitory memory media, to off-load data, or to upload data. An article of manufacture, such as one utilizing a communication system, may be tangibly embodied as or in the memory 610, which may be or comprise a device-readable storage medium.

The processing circuitry 602 may be configured to communicate with an access network or other network using the communication interface 612. The communication interface 612 may comprise one or more communication subsystems and may include or be communicatively coupled to an antenna 622. The communication interface 612 may include one or more transceivers used to communicate, such as by communicating with one or more remote transceivers of another device capable of wireless communication (e.g., another UE or a network node in an access network). Each transceiver may include a transmitter 618 and/or a receiver 620 appropriate to provide network communications (e.g., optical, electrical, frequency allocations, and so forth). Moreover, the transmitter 618 and receiver 620 may be coupled to one or more antennas (e.g., the antenna 622) and may share circuit components, software, or firmware, or alternatively be implemented separately.

In the illustrated embodiment, communication functions of the communication interface 612 may include cellular communication, WiFi communication, LPWAN communication, data communication, voice communication, multimedia communication, short-range communications such as Bluetooth, NFC, location-based communication such as the use of the Global Positioning System (GPS) to determine a location, another like communication function, or any combination thereof. Communications may be implemented according to one or more communication protocols and/or standards, such as IEEE 802.11, Code Division Multiplexing Access (CDMA), Wideband CDMA (WCDMA), GSM, LTE, NR, UMTS, WiMax, Ethernet, Transmission Control Protocol/Internet Protocol (TCP/IP), Synchronous Optical Networking (SONET), Asynchronous Transfer Mode (ATM), Quick User Datagram Protocol Internet Connection (QUIC), Hypertext Transfer Protocol (HTTP), and so forth.

Regardless of the type of sensor, a UE may provide an output of data captured by its sensors, through its communication interface 612, or via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, a UE comprises an actuator, a motor, or a switch related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an IoT device, may be a device for use in one or more application domains, these domains comprising, but not limited to, city wearable technology, extended industrial application, and healthcare. Non-limiting examples of such an IoT device are a device which is or which is embedded in: a connected refrigerator or freezer, a television, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or VR, a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence of the intended application of the IoT device in addition to other components as described in relation to the UE 600 shown in Figure 6.

As yet another specific example, in an IoT scenario, a UE may represent a machine or other device that performs monitoring and/or measurements and transmits the results of such monitoring and/or measurements to another UE and/or a network node. The UE may in this case be an M2M device, which may in a 3GPP context be referred to as an MTC device. As one particular example, the UE may implement the 3GPP NB-IoT standard. In other scenarios, a UE may represent a vehicle, such as a car, a bus, a truck, a ship, an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g., by controlling an actuator) to increase or decrease the drone's speed. The first and/or the second UE can also include more than one of the functionalities described above. For example, a UE might comprise the sensor and the actuator and handle communication of data for both the speed sensor and the actuators.

Figure 7 shows a network node 700 in accordance with some embodiments. As used herein, network node refers to equipment capable, configured, arranged, and/or operable to communicate directly or indirectly with a UE and/or with other network nodes or equipment in a telecommunication network. Examples of network nodes include, but are not limited to, APs (e.g., radio APs), Base Stations (BSs) (e.g., radio BSs, Node Bs, evolved Node Bs (eNBs), NR Node Bs (gNBs), and CN nodes). For instance, in some embodiments, a network node might not include the radio circuitry. The hardware of the network node could be used to implement any of the embodiments disclosed herein. Specifically, any of the steps described in the Figures 5A-5C.

BSs may be categorized based on the amount of coverage they provide (or, stated differently, their transmit power level) and so, depending on the provided amount of coverage, may be referred to as femto BSs, pico BSs, micro BSs, or macro BSs. A BS may be a relay node or a relay donor node controlling a relay. A network node may also include one or more (or all) parts of a distributed radio BS such as centralized digital units and/or Remote Radio Units (RRUs), sometimes referred to as Remote Radio Heads (RRHs). Such RRUs may or may not be integrated with an antenna as an antenna integrated radio. Parts of a distributed radio BS may also be referred to as nodes in a Distributed Antenna System (DAS).

Other examples of network nodes include multiple Transmission Point (multi-TRP) 5G access nodes, Multi-Standard Radio (MSR) equipment such as MSR BSs, network controllers such as Radio Network Controllers (RNCs) or BS Controllers (BSCs), Base Transceiver Stations (BTSs), transmission points, transmission nodes, Multi-Cell/Multicast Coordination Entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node 700 includes processing circuitry 702, memory 704, a communication interface 706, and a power source 708. The network node 700 may be composed of multiple physically separate components (e.g., a Node B component and an RNC component, or a BTS component and a BSC component, etc.), which may each have their own respective components. In certain scenarios in which the network node 700 comprises multiple separate components (e.g., BTS and BSC components), one or more of the separate components may be shared among several network nodes. For example, a single RNC may control multiple Node Bs. In such a scenario, each unique Node B and RNC pair may in some instances be considered a single separate network node. In some embodiments, the network node 700 may be configured to support multiple RATs. In such embodiments, some components may be duplicated (e.g., separate memory 704 for different RATs) and some components may be reused (e.g., an antenna 710 may be shared by different RATs). The network node 700 may also include multiple sets of the various illustrated components for different wireless technologies integrated into network node 700, for example GSM, WCDMA, LTE, NR, WiFi, Zigbee, Z-wave, Long Range Wide Area Network (LoRaWAN), Radio Frequency Identification (RFID), or Bluetooth wireless technologies. These wireless technologies may be integrated into the same or different chip or set of chips and other components within the network node 700.

The processing circuitry 702 may comprise a combination of one or more of a microprocessor, controller, microcontroller, CPU, DSP, ASIC, FPGA, or any other suitable computing device, resource, or combination of hardware, software, and/or encoded logic operable to provide, either alone or in conjunction with other network node 700 components, such as the memory 704, to provide network node 700 functionality.

In some embodiments, the processing circuitry 702 includes a System on a Chip (SOC). In some embodiments, the processing circuitry 702 includes one or more of Radio Frequency (RF) transceiver circuitry 712 and baseband processing circuitry 714. In some embodiments, the RF transceiver circuitry 712 and the baseband processing circuitry 714 may be on separate chips (or sets of chips), boards, or units, such as radio units and digital units. In alternative embodiments, part or all of the RF transceiver circuitry 712 and the baseband processing circuitry 714 may be on the same chip or set of chips, boards, or units.

The memory 704 may comprise any form of volatile or non-volatile computer-readable memory including, without limitation, persistent storage, solid state memory, remotely mounted memory, magnetic media, optical media, RAM, ROM, mass storage media (for example, a hard disk), removable storage media (for example, a flash drive, a Compact Disk (CD), or a Digital Video Disk (DVD)), and/or any other volatile or non-volatile, non-transitory device-readable, and/or computer-executable memory devices that store information, data, and/or instructions that may be used by the processing circuitry 702. The memory 704 may store any suitable instructions, data, or information, including a computer program, software, an application including one or more of logic, rules, code, tables, and/or other instructions capable of being executed by the processing circuitry 702 and utilized by the network node 700. The memory 704 may be used to store any calculations made by the processing circuitry 702 and/or any data received via the communication interface 706. In some embodiments, the processing circuitry 702 and the memory 704 are integrated.

The communication interface 706 is used in wired or wireless communication of signaling and/or data between a network node, access network, and/or UE. As illustrated, the communication interface 706 comprises port(s)/terminal(s) 716 to send and receive data, for example to and from a network over a wired connection. The communication interface 706 also includes radio front-end circuitry 718 that may be coupled to, or in certain embodiments a part of, the antenna 710. The radio front-end circuitry 718 comprises filters 720 and amplifiers 722. The radio front-end circuitry 718 may be connected to the antenna 710 and the processing circuitry 702. The radio front-end circuitry 718 may be configured to condition signals communicated between the antenna 710 and the processing circuitry 702. The radio front-end circuitry 718 may receive digital data that is to be sent out to other network nodes or UEs via a wireless connection. The radio front-end circuitry 718 may convert the digital data into a radio signal having the appropriate channel and bandwidth parameters using a combination of the filters 720 and/or the amplifiers 722. The radio signal may then be transmitted via the antenna 710. Similarly, when receiving data, the antenna 710 may collect radio signals which are then converted into digital data by the radio front-end circuitry 718. The digital data may be passed to the processing circuitry 702. In other embodiments, the communication interface 706 may comprise different components and/or different combinations of components.

In certain alternative embodiments, the network node 700 does not include separate radio front-end circuitry 718; instead, the processing circuitry 702 includes radio front-end circuitry and is connected to the antenna 710. Similarly, in some embodiments, all or some of the RF transceiver circuitry 712 is part of the communication interface 706. In still other embodiments, the communication interface 706 includes the one or more ports or terminals 716, the radio front-end circuitry 718, and the RF transceiver circuitry 712 as part of a radio unit (not shown), and the communication interface 706 communicates with the baseband processing circuitry 714, which is part of a digital unit (not shown).

The antenna 710 may include one or more antennas, or antenna arrays, configured to send and/or receive wireless signals. The antenna 710 may be coupled to the radio front-end circuitry 718 and may be any type of antenna capable of transmitting and receiving data and/or signals wirelessly. In certain embodiments, the antenna 710 is separate from the network node 700 and connectable to the network node 700 through an interface or port.

The antenna 710, the communication interface 706, and/or the processing circuitry 702 may be configured to perform any receiving operations and/or certain obtaining operations described herein as being performed by the network node 700. Any information, data, and/or signals may be received from a UE, another network node, and/or any other network equipment. Similarly, the antenna 710, the communication interface 706, and/or the processing circuitry 702 may be configured to perform any transmitting operations described herein as being performed by the network node 700. Any information, data, and/or signals may be transmitted to a UE, another network node, and/or any other network equipment.

The power source 708 provides power to the various components of the network node 700 in a form suitable for the respective components (e.g., at a voltage and current level needed for each respective component). The power source 708 may further comprise, or be coupled to, power management circuitry to supply the components of the network node 700 with power for performing the functionality described herein. For example, the network node 700 may be connectable to an external power source (e.g., the power grid or an electricity outlet) via input circuitry or an interface such as an electrical cable, whereby the external power source supplies power to power circuitry of the power source 708. As a further example, the power source 708 may comprise a source of power in the form of a battery or battery pack which is connected to, or integrated in, power circuitry. The battery may provide backup power should the external power source fail.

Embodiments of the network node 700 may include additional components beyond those shown in Figure 7 for providing certain aspects of the network node's functionality, including any of the functionality described herein and/or any functionality necessary to support the subject matter described herein. For example, the network node 700 may include user interface equipment to allow input of information into the network node 700 and to allow output of information from the network node 700. This may allow a user to perform diagnostic, maintenance, repair, and other administrative functions for the network node 700.

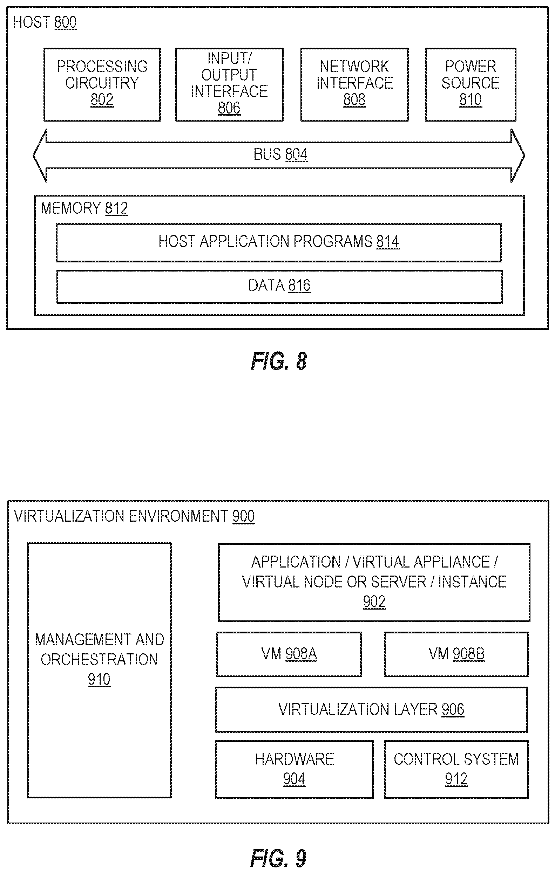

Figure 8 is a block diagram of a host 800, which may be an embodiment of the host 216 of Figure 2, in accordance with various aspects described herein. As used herein, the host 800 may be or comprise various combinations of hardware and/or software including a standalone server, a blade server, a cloud-implemented server, a distributed server, a virtual machine, container, or processing resources in a server farm. The host 800 may provide one or more services to one or more UEs.

The host 800 includes processing circuitry 802 that is operatively coupled via a bus 804 to an input/output interface 806, a network interface 808, a power source 810, and memory 812. Other components may be included in other embodiments. Features of these components may be substantially similar to those described with respect to the devices of previous figures, such as Figures 6 and 7, such that the descriptions thereof are generally applicable to the corresponding components of the host 800.

The memory 812 may include one or more computer programs including one or more host application programs 814 and data 816, which may include user data, e.g. data generated by a UE for the host 800 or data generated by the host 800 for a UE. Embodiments of the host 800 may utilize only a subset or all of the components shown. The host application programs 814 may be implemented in a container-based architecture and may provide support for video codecs (e.g., Versatile Video Coding (VVC), High Efficiency Video Coding (HEVC), Advanced Video Coding (AVC), Moving Picture Experts Group (MPEG), VP9) and audio codecs (e.g., Free Lossless Audio Codec (FLAC), Advanced Audio Coding (AAC), MPEG, G.711), including transcoding for multiple different classes, types, or implementations of UEs (e.g., handsets, desktop computers, wearable display systems, and heads-up display systems). The host application programs 814 may also provide for user authentication and licensing checks and may periodically report health, routes, and content availability to a central node, such as a device in or on the edge of a core network. Accordingly, the host 800 may select and/or indicate a different host for Over-The-Top (OTT) services for a UE. The host application programs 814 may support various protocols, such as the HTTP Live Streaming (HLS) protocol, Real-Time Messaging Protocol (RTMP), Real-Time Streaming Protocol (RTSP), Dynamic Adaptive Streaming over HTTP (DASH or MPEG-DASH), etc.

Figure 9 is a block diagram illustrating a virtualization environment 900 in which functions implemented by some embodiments may be virtualized. In the present context, virtualizing means creating virtual versions of apparatuses or devices which may include virtualizing hardware platforms, storage devices, and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more Virtual Machines (VMs) implemented in one or more virtual environments 900 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications 902 (which may alternatively be called software instances, virtual appliances, network functions, virtual nodes, virtual network functions, etc.) are run in the virtualization environment 900 to implement some of the features, functions, and/or benefits of some of the embodiments disclosed herein.

Hardware 904 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers 906 (also referred to as hypervisors or VM Monitors (VMMs)), provide VMs 908A and 908B (one or more of which may be generally referred to as VMs 908), and/or perform any of the functions, features, and/or benefits described in relation with some embodiments described herein. The virtualization layer 906 may present a virtual operating platform that appears like networking hardware to the VMs 908.

The VMs 908 comprise virtual processing, virtual memory, virtual networking, or interface and virtual storage, and may be run by a corresponding virtualization layer 906. Different embodiments of the instance of a virtual appliance 902 may be implemented on one or more of the VMs 908, and the implementations may be made in different ways. Virtualization of the hardware is in some contexts referred to as Network Function Virtualization (NFV). NFV may be used to consolidate many network equipment types onto industry standard high volume server hardware, physical switches, and physical storage, which can be located in data centers and customer premise equipment.

In the context of NFV, a VM 908 may be a software implementation of a physical machine that runs programs as if they were executing on a physical, non-virtualized machine. Each of the VMs 908, and that part of the hardware 904 that executes that VM, be it hardware dedicated to that VM and/or hardware shared by that VM with others of the VMs 908, forms separate virtual network elements. Still in the context of NFV, a virtual network function is responsible for handling specific network functions that run in one or more VMs 908 on top of the hardware 904 and corresponds to the application 902.

The hardware 904 may be implemented in a standalone network node with generic or specific components. The hardware 904 may implement some functions via virtualization. Alternatively, the hardware 904 may be part of a larger cluster of hardware (e.g., such as in a data center or CPE) where many hardware nodes work together and are managed via management and orchestration 910, which, among others, oversees lifecycle management of the applications 902. In some embodiments, the hardware 904 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a RAN or a BS. In some embodiments, some signaling can be provided with the use of a control system 912 which may alternatively be used for communication between hardware nodes and radio units.

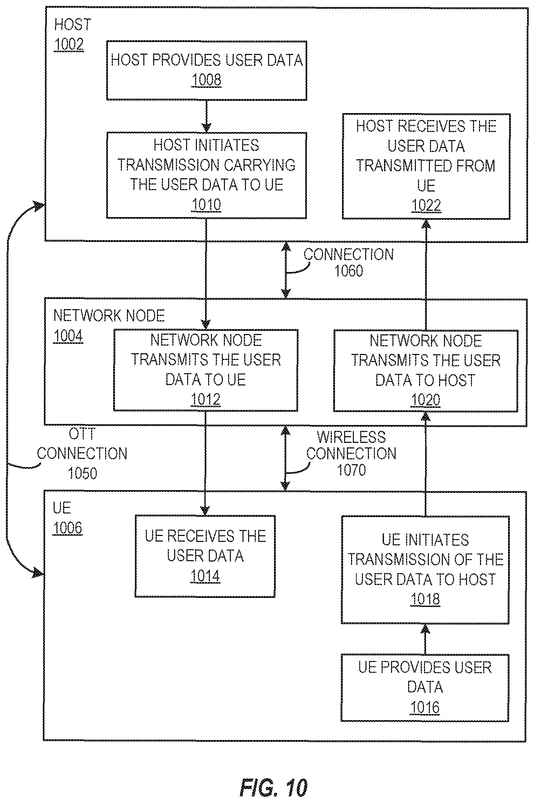

Figure 10 shows a communication diagram of a host 1002 communicating via a network node 1004 with a UE 1006 over a partially wireless connection in accordance with some embodiments. Example implementations, in accordance with various embodiments, of the UE (such as the UE 212A of Figure 2 and/or the UE 600 of Figure 6), the network node (such as the network node 210A of Figure 2 and/or the network node 700 of Figure 7), and the host (such as the host 216 of Figure 2 and/or the host 800 of Figure 8) discussed in the preceding paragraphs will now be described with reference to Figure 10.

Like the host 800, embodiments of the host 1002 include hardware, such as a communication interface, processing circuitry, and memory. The host 1002 also includes software, which is stored in or is accessible by the host 1002 and executable by the processing circuitry. The software includes a host application that may be operable to provide a service to a remote user, such as the UE 1006 connecting via an OTT connection 1050 extending between the UE 1006 and the host 1002. In providing the service to the remote user, a host application may provide user data which is transmitted using the OTT connection 1050.

The network node 1004 includes hardware enabling it to communicate with the host 1002 and the UE 1006 via a connection 1060. The connection 1060 may be direct or pass through a core network (like the core network 206 of Figure 2) and/or one or more other intermediate networks, such as one or more public, private, or hosted networks. For example, an intermediate network may be a backbone network or the Internet.

The UE 1006 includes hardware and software, which is stored in or accessible by the UE 1006 and executable by the UE's processing circuitry. The software includes a client application, such as a web browser or operator-specific "app" that may be operable to provide a service to a human or non-human user via the UE 1006 with the support of the host 1002. In the host 1002, an executing host application may communicate with the executing client application via the OTT connection 1050 terminating at the UE 1006 and the host 1002. In providing the service to the user, the UE's client application may receive request data from the host's host application and provide user data in response to the request data. The OTT connection 1050 may transfer both the request data and the user data. The UE's client application may interact with the user to generate the user data that it provides to the host application through the OTT connection 1050.

The OTT connection 1050 may extend via the connection 1060 between the host 1002 and the network node 1004 and via a wireless connection 1070 between the network node 1004 and the UE 1006 to provide the connection between the host 1002 and the UE 1006. The connection 1060 and the wireless connection 1070, over which the OTT connection 1050 may be provided, have been drawn abstractly to illustrate the communication between the host 1002 and the UE 1006 via the network node 1004, without explicit reference to any intermediary devices and the precise routing of messages via these devices.

As an example of transmitting data via the OTT connection 1050, in step 1008, the host 1002 provides user data, which may be performed by executing a host application. In some embodiments, the user data is associated with a particular human user interacting with the UE 1006. In other embodiments, the user data is associated with a UE 1006 that shares data with the host 1002 without explicit human interaction. In step 1010, the host 1002 initiates a transmission carrying the user data towards the UE 1006. The host 1002 may initiate the transmission responsive to a request transmitted by the UE 1006. The request may be caused by human interaction with the UE 1006 or by operation of the client application executing on the UE 1006. The transmission may pass via the network node 1004 in accordance with the teachings of the embodiments described throughout this disclosure. Accordingly, in step 1012, the network node 1004 transmits to the UE 1006 the user data that was carried in the transmission that the host 1002 initiated, in accordance with the teachings of the embodiments described throughout this disclosure. In step 1014, the UE 1006 receives the user data carried in the transmission, which may be performed by a client application executed on the UE 1006 associated with the host application executed by the host 1002.

In some examples, the UE 1006 executes a client application which provides user data to the host 1002. The user data may be provided in reaction or response to the data received from the host 1002. Accordingly, in step 1016, the UE 1006 may provide user data, which may be performed by executing the client application. In providing the user data, the client application may further consider user input received from the user via an input/output interface of the UE 1006. Regardless of the specific manner in which the user data was provided, the UE 1006 initiates, in step 1018, transmission of the user data towards the host 1002 via the network node 1004. In step 1020, in accordance with the teachings of the embodiments described throughout this disclosure, the network node 1004 receives user data from the UE 1006 and initiates transmission of the received user data towards the host 1002. In step 1022, the host 1002 receives the user data carried in the transmission initiated by the UE 1006.

One or more of the various embodiments improve the performance of OTT services provided to the UE 1006 using the OTT connection 1050, in which the wireless connection 1070 forms the last segment. More precisely, the teachings of these embodiments may improve the e.g., data rate, latency, power consumption, etc. and thereby provide benefits such as e.g., reduced user waiting time, relaxed restriction on file size, improved content resolution, better responsiveness, extended battery lifetime, etc.

In an example scenario, factory status information may be collected and analyzed by the host 1002. As another example, the host 1002 may process audio and video data which may have been retrieved from a UE for use in creating maps. As another example, the host 1002 may collect and analyze real-time data to assist in controlling vehicle congestion (e.g., controlling traffic lights). As another example, the host 1002 may store surveillance video uploaded by a UE. As another example, the host 1002 may store or control access to media content such as video, audio, VR, or AR which it can broadcast, multicast, or unicast to UEs. As other examples, the host 1002 may be used for energy pricing, remote control of non-time critical electrical load to balance power generation needs, location services, presentation services (such as compiling diagrams etc. from data collected from remote devices), or any other function of collecting, retrieving, storing, analyzing, and/or transmitting data.

In some examples, a measurement procedure may be provided for the purpose of monitoring data rate, latency, and other factors on which the one or more embodiments improve. There may further be an optional network functionality for reconfiguring the OTT connection 1050 between the host 1002 and the UE 1006 in response to variations in the measurement results. The measurement procedure and/or the network functionality for reconfiguring the OTT connection 1050 may be implemented in software and hardware of the host 1002 and/or the UE 1006. In some embodiments, sensors (not shown) may be deployed in or in association with other devices through which the OTT connection 1050 passes; the sensors may participate in the measurement procedure by supplying values of the monitored quantities exemplified above, or by supplying values of other physical quantities from which software may compute or estimate the monitored quantities. The reconfiguring of the OTT connection 1050 may include message format, retransmission settings, preferred routing, etc.; the reconfiguring need not directly alter the operation of the network node 1004. Such procedures and functionalities may be known and practiced in the art. In certain embodiments, measurements may involve proprietary UE signaling that facilitates measurements of throughput, propagation times, latency, and the like by the host 1002. The measurements may be implemented in that software causes messages to be transmitted, in particular empty or 'dummy' messages, using the OTT connection 1050 while monitoring propagation times, errors, etc.

Although the computing devices described herein (e.g., UEs, network nodes, hosts) may include the illustrated combination of hardware components, other embodiments may comprise computing devices with different combinations of components. It is to be understood that these computing devices may comprise any suitable combination of hardware and/or software needed to perform the tasks, features, functions, and methods disclosed herein. Determining, calculating, obtaining, or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box or nested within multiple boxes, in practice computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hardwired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device but are enjoyed by the computing device as a whole and/or by end users and a wireless network generally.

At least some of the following abbreviations may be used in this disclosure. If there is an inconsistency between abbreviations, preference should be given to how it is used above. If listed multiple times below, the first listing should be preferred over any subsequent listing(s).

| | | |
|---|---|---|
| • | 3GPP | Third Generation Partnership Project |
| • | 5G | Fifth Generation |
| • | 5GC | Fifth Generation Core |
| • | 5GS | Fifth Generation System |
| • | 5QI | Fifth Generation Quality of Service Identifier |
| • | AF | Application Function |
| • | AMF | Access and Mobility Function |
| • | AN | Access Network |
| • | AP | Access Point |
| • | ARP | Allocation and Retention Priority |
| • | ASIC | Application Specific Integrated Circuit |
| • | AUSF | Authentication Server Function |
| • | CN | Core Network |
| • | CPU | Central Processing Unit |
| • | DN | Data Network |
| • | DSP | Digital Signal Processor |
| • | eNB | Enhanced or Evolved Node B |
| • | EPS | Evolved Packet System |
| • | E-UTRA | Evolved Universal Terrestrial Radio Access |
| • | FPGA | Field Programmable Gate Array |
| • | gNB | New Radio Base Station |
| • | gNB-DU | New Radio Base Station Distributed Unit |
| • | HSS | Home Subscriber Server |
| • | IoT | Internet of Things |
| • | IP | Internet Protocol |
| • | LTE | Long Term Evolution |
| • | MME | Mobility Management Entity |
| • | MTC | Machine Type Communication |
| • | NEF | Network Exposure Function |
| • | NF | Network Function |
| • | NG | Next Generation |
| • | NGAP | NG Application Protocol |
| • | NG-C | NG Control Plane |
| • | NG-RAN | Next Generation Radio Access Network |
| • | NR | New Radio |
| • | NRF | Network Function Repository Function |
| • | NSSF | Network Slice Selection Function |
| • | OTT | Over-the-Top |
| • | PC | Personal Computer |
| • | PCF | Policy Control Function |
| • | PDU | Protocol Data Unit |
| • | P-GW | Packet Data Network Gateway |
| • | PPI | Paging Policy Indicator |
| • | QoS | Quality of Service |
| • | RAM | Random Access Memory |
| • | RAN | Radio Access Network |
| • | RAT | Radio Access Technology |
| • | ROM | Read Only Memory |
| • | RRC | Radio Resource Control |
| • | RRH | Remote Radio Head |
| • | RTT | Round Trip Time |
| • | SCEF | Service Capability Exposure Function |
| • | SMF | Session Management Function |
| • | UDM | Unified Data Management |
| • | UE | User Equipment |
| • | UPF | User Plane Function |

## Claims

1. A method performed by a network node, the method comprising:
receiving (500) paging policy differentiation information; and
formulating (502) a paging policy and/or differentiation strategy when paging a User Equipment, UE, in RRC_INACTIVE based on the paging policy differentiation information: and wherein formulating the paging policy and/or differentiation strategy comprises:
formulating the paging policy and/or differentiation strategy when paging the UE in RRC_INACTIVE with long eDRX > 10.24 sec.

2. The method of claim 1, wherein the paging policy differentiation information comprises one or more of the group consisting of:
a Paging Policy Indicator, PPI;
an Allocation and Retention Priority, ARP;
a Fifth Generation, 5G, Quality of Service, QoS, Identifier, 5QI; and
a PDU session ID information.

3. The method of any of claims 1-2, wherein receiving the paging policy differentiation information comprises: receiving the paging policy differentiation information from a Core Network, CN, node.

4. The method of claim 3, wherein the CN node comprises an Access and Mobility Management Function, AMF, node.

5. The method of any of claims 1-4, wherein the network node comprises a Next Generation - Radio Access Network, NG-RAN, node.

6. The method of any of claims 1-5, wherein receiving the paging policy differentiation information comprises: receiving the paging policy differentiation information over NG Control Plane, NG-C, signaling.

7. The method of any of claims 1-6, wherein the paging policy differentiation information was provided by a Session Management Function, SMF, node.

8. The method of any of claims 1-7, wherein receiving the paging policy differentiation information is done over a new N2 message which indicates per Protocol Date Unit, PDU, Session based paging.

9. The method of any of claims 1-8, wherein receiving the paging policy differentiation information is done over a new N2 message which can provision the QoS flow information related to where the downlink data is received.

10. The method of any of claims 1-9, wherein receiving the paging policy differentiation information is during a request from the CN node to the network node for triggering RAN paging based on the paging policy differentiation information.

11. A network node (700) comprising processing circuitry (702) and memory (704), the memory (704) comprising instructions to cause the network node (700) to:
receive paging policy differentiation information; and
formulate a paging policy and/or differentiation strategy when paging a User Equipment, UE, in RRC_INACTIVE based on the paging policy differentiation information; and
wherein formulating the paging policy and/or differentiation strategy comprises:
formulating the paging policy and/or differentiation strategy when paging the UE in RRC_INACTIVE with long eDRX > 10.24 sec.

12. The network node (700) of claim 11 further comprising instructions to cause the network node (700) to perform any of claims 2-10.

## Patentansprüche

1. Verfahren, das von einem Netzwerkknoten durchgeführt wird, wobei das Verfahren Folgendes umfasst:
Empfangen (500) von Informationen zur Funkrufrichtliniendifferenzierung;
Formulieren (502) einer Funkrufrichtlinien- und/oder - differenzierungsstrategie bei Abfrage einer Benutzereinrichtung, UE, in RRC_INACTIVE basierend auf den Informationen zur Funkrufrichtliniendifferenzierung; und wobei das Formulieren der Funkrufrichtlinien- und/oder - differenzierungsstrategie Folgendes umfasst:
Formulieren der Funkrufrichtlinien- und/oder - differenzierungsstrategie bei Abfrage der UE in RRC_INACTIVE bei langem eDRX > 10,24 sec.

2. Verfahren nach Anspruch 1, wobei die Informationen zur Funkrufrichtliniendifferenzierung eines oder mehrere aus der Gruppe umfassen, die aus Folgendem besteht:
einem Funkrufrichtlinienindikator, PPI;
einer Zuweisungs- und Beibehaltungspriorität, ARP;
einer Fifth-Generation-,5G-,Quality-of-Service-,QoS-,Kennung, 5QI, und
einer PDU-Sitzungs-ID-Information.

3. Verfahren nach einem der Ansprüche 1-2, wobei das Empfangen der Informationen zur Funkrufrichtliniendifferenzierung Folgendes umfasst: Empfangen der Informationen zur Funkrufrichtliniendifferenzierung von einem Kernnetzwerkknoten, CN-Knoten.

4. Verfahren nach Anspruch 3, wobei der CN-Knoten einen Knoten mit Zugangs- und Mobilitätsverwaltungsfunktion, AMF, umfasst.

5. Verfahren nach einem der Ansprüche 1-4, wobei der Netzwerkknoten einen Funkzugangsnetzwerknoten der nächsten Generation, NG-RAN-Knoten, umfasst.

6. Verfahren nach einem der Ansprüche 1-5, wobei das Empfangen der Informationen zur Funkrufrichtliniendifferenzierung Folgendes umfasst: Empfangen der Informationen zur Funkrufrichtliniendifferenzierung über NG-Steuerebenensignalisierung, NG-C-Signalisierung, umfasst.

7. Verfahren nach einem der Ansprüche 1-6, wobei die Informationen zur Funkrufrichtliniendifferenzierung von einem Knoten mit Sitzungsverwaltungsfunktion, SMF, bereitgestellt wurden.

8. Verfahren nach einem der Ansprüche 1 bis 7, wobei das Empfangen der Informationen zur Funkrufrichtliniendifferenzierung über eine neue N2-Nachricht erfolgt, die Funkruf auf der Basis von Pro-Protokolldateneinheitssitzung, Pro-PDU-Sitzung, angibt.

9. Verfahren nach einem der Ansprüche 1-8, wobei das Empfangen der Informationen zur Funkrufrichtliniendifferenzierung über eine neue N2-Nachricht erfolgt, die QoS-Flussinformationen in Bezug darauf, wo die Downlink-Daten empfangen werden, bereitstellen kann.

10. Verfahren nach einem der Ansprüche 1-9, wobei das Empfangen der Informationen zur Funkrufrichtliniendifferenzierung während einer Anforderung vom CN-Knoten an den Netzwerkknoten zum Auslösen von RAN-Funkruf basierend auf den Informationen zur Funkrufrichtliniendifferenzierung erfolgt.

11. Netzwerkknoten (700), umfassend Verarbeitungsschaltungsanordnung (702) und Speicher (704), wobei der Speicher (704) Anweisungen speichert, die den Netzwerkknoten (700) zu Folgendem veranlassen:
Empfangen von Informationen zur Funkrufrichtliniendifferenzierung; und
Formulieren einer Funkrufrichtlinien- und/oder - differenzierungsstrategie bei Abfrage einer Benutzereinrichtung, UE, in RRC_INACTIVE basierend auf den Informationen zur Funkrufrichtliniendifferenzierung; und wobei das Formulieren der Funkrufrichtlinien- und/oder - differenzierungsstrategie Folgendes umfasst:
Formulieren der Funkrufrichtlinien- und/oder - differenzierungsstrategie bei Abfrage der UE in RRC_INACTIVE bei langem eDRX > 10,24 sec.

12. Netzwerkknoten (700) nach Anspruch 11, ferner umfassend Anweisungen, um den Netzwerkknoten (700) zum Durchführen nach einem der Ansprüche 2-10 zu veranlassen.

## Revendications

1. Procédé réalisé par un nœud de réseau, le procédé comprenant :
la réception (500) d'informations de différenciation de politique de radiomessagerie ; et
la formulation (502) d'une politique de radiomessagerie et/ou stratégie de différenciation lors de la radiomessagerie d'un équipement utilisateur, UE, dans RRC_INACTIVE sur la base des informations de différenciation de politique de radiomessagerie ; et
dans lequel la formulation de la politique de radiomessagerie et/ou stratégie de différenciation comprend :
la formulation de la politique de radiomessagerie et/ou stratégie de différenciation lors de la radiomessagerie de l'UE dans RRC_INACTIVE avec eDRX long > 10,24 sec.

2. Procédé selon la revendication 1, dans lequel les informations de différenciation de politique de radiomessagerie comprennent un ou plusieurs du groupe composé de :
un indicateur de politique de radiomessagerie, PPI ;
une priorité d'allocation et de rétention, ARP ;
un identifiant de qualité de service, QoS, de cinquième génération, 5G, 5QI ; et
des informations d'ID de session PDU.

3. Procédé selon l'une quelconque des revendications 1 à 2, dans lequel la réception des informations de différenciation de politique de radiomessagerie comprend : la réception des informations de différenciation de politique de radiomessagerie depuis un nœud de réseau central, CN.

4. Procédé selon la revendication 3, dans lequel le nœud CN comprend un nœud de fonction de gestion d'accès et de mobilité, AMF.

5. Procédé selon l'une quelconque des revendications 1 à 4, dans lequel le nœud de réseau comprend un nœud de réseau d'accès radio de prochaine génération, NG-RAN.

6. Procédé selon l'une quelconque des revendications 1 à 5, dans lequel la réception des informations de différenciation de politique de radiomessagerie comprend : la réception des informations de différenciation de politique de radiomessagerie sur une signalisation de plan de commande NG, NG-C.

7. Procédé selon l'une quelconque des revendications 1 à 6, dans lequel les informations de différenciation de politique de radiomessagerie ont été fournies par un nœud de fonction de gestion de session, SMF.

8. Procédé selon l'une quelconque des revendications 1 à 7, dans lequel la réception des informations de différenciation de politique de radiomessagerie est réalisée sur un nouveau message N2 qui indique une radiomessagerie basée sur session d'unité de données de protocole, PDU.

9. Procédé selon l'une quelconque des revendications 1 à 8, dans lequel la réception des informations de différenciation de politique de radiomessagerie est réalisée sur un nouveau message N2 qui peut fournir les informations de flux QoS relatives à l'emplacement de réception des données de liaison descendante.

10. Procédé selon l'une quelconque des revendications 1 à 9, dans lequel la réception des informations de différenciation de politique de radiomessagerie se déroule au cours d'une demande du nœud CN au nœud de réseau pour déclencher une radiomessagerie RAN sur la base des informations de différenciation de politique de radiomessagerie.

11. Nœud de réseau (700) comprenant une circuiterie de traitement (702) et une mémoire (704), la mémoire (704) comprenant des instructions pour amener le nœud de réseau (700) à :
recevoir des informations de différenciation de politique de radiomessagerie ; et
formuler une politique de radiomessagerie et/ou stratégie de différenciation lors de la radiomessagerie d'un équipement utilisateur, UE, dans RRC_INACTIVE sur la base des informations de différenciation de politique de radiomessagerie ; et dans lequel la formulation de la politique de radiomessagerie et/ou stratégie de différenciation comprend :
la formulation de la politique de radiomessagerie et/ou stratégie de différenciation lors de la radiomessagerie de l'UE dans RRC_INACTIVE avec eDRX long > 10,24 sec.

12. Nœud de réseau (700) selon la revendication 11, comprenant en outre des instructions pour amener le nœud de réseau (700) à réaliser l'une quelconque des revendications 2 à 10.
